Europäisches Patentamt

European Patent Office

Office européen des brevets

(19)

(11) Publication number: **0 105 643**
**A1**

(12) **EUROPEAN PATENT APPLICATION**

(21) Application number: **83305220.2**

(22) Date of filing: **07.09.83**

(51) Int. Cl.³: **G 09 F 7/16**

(30) Priority: **08.09.82 ZA 826575**

(43) Date of publication of application:
**18.04.84 Bulletin 84/16**

(84) Designated Contracting States:
**BE DE FR GB NL**

(71) Applicant: **BUFFALO CORPORATION LIMITED**
**72 Maraisburg Road Industria**
**Johannesburg Transvaal(ZA)**

(72) Inventor: **Pretorius, David Johannes**
**35 Shere Holdings**
**District Pretoria Transvaal(ZA)**

(74) Representative: **Jennings, Roy Alfred et al,**
**GILL JENNINGS & EVERY 53-64 Chancery Lane**
**London WC2A 1HN(GB)**

(54) Method of embossing plates and apparatus therefor.

(57) A method of and apparatus for embossing characters (4) in a plate (1), particularly a motor vehicle registration plate, wherein a sheet (3) of which the intended operative face differs visually from the intended operative face of the plate (1) and of which the other face of the sheet (3) is provided with an activatable adhesive is located on the intended operative face of a blank plate (2); and the adhesive is activated selectively in places on the sheet (3) other than those where the embossed characters (4) will appear in order to cause the sheet (3) to adhere to the plate (2) in those places only. The method furthermore includes the steps of embossing the characters (4) in the plate (2); cutting through the material of sheet (3) all along the outer peripheries of the embossed characters (4); removing the cut out material to expose the underlying embossed characters (4); and activating the rest of the adhesive on the sheet (3) to cause the rest of the sheet (3) to adhere to the plate (2).

FIG 1

FIG 6

EP 0 105 643 A1

"Method Of Embossing Plates And Apparatus Therefor"

THIS invention relates to the embossing of plates, particularly motor vehicle registration plates.

It is known to emboss characters on a pre-painted blank plate of which the operative face is provided with a sheet of reflective material, or a sheet of a material of a contrasting colour; simultaneously, or subsequently, cutting the sheet material all along the peripheries of each of the embossed characters; and then removing the cut out parts of the sheet material to expose the underlying painted embossed characters.

A major difficulty associated with such an operation is that if the bond between the sheet and the plate is too secure, the cut out parts of the sheet cannot readily be removed afterwards and, apart from the time which is so wasted, the plate is often damaged during this

2

part of the operation.

In an attempt to overcome this problem, it has been suggested to employ a two stage temperature sensitive adhesive on the sheet for securing the sheet to the plate; the intention being that the adhesive is in the first instance activated to its first stage only, which serves to secure the sheet sufficiently to the plate to allow for the embossing operation to be effected thereto but which allows the cut out parts of the sheet to be removed relatively easily afterwards; and thereafter to activate the adhesive to its second stage to secure the sheet to the plate in a more permanent manner.

However, the aforesaid arrangement requires very accurately controlled operating conditions, especially meticulous temperature control, in order to give acceptable results and it has been found that such control is very difficult to achieve in practice.

It is accordingly an object of this invention to

3

provide a method and means of embossing such plates with which the aforesaid problems will be overcome or at least minimised.

According to the invention a method of embossing characters in a plate, particularly a motor vehicle registration plate, includes the steps of locating onto the intended operative face of the plate a sheet of which the intended operative face differs visually from the intended operative face of the plate and of which the other face of the sheet is provided with an activatable adhesive; and activating the adhesive selectively in places on the sheet other than those where the embossed characters will appear in order to cause the sheet to adhere to the plate in those places only.

It will be appreciated that because the adhesive is not activated in those parts of the sheet which will overlie the embossed characters, those parts when cut out in a subsequent operation can be removed from the plate without difficulty.

4

Further according to the invention the said selective places are located in a narrow zone extending along the outer edges of the plate.

It will be appreciated that in the case of most plates, and particularly in the case of motor vehicle registration plates, the area located immediately adjacent the outer edges of the plate usually does not require any embossing to be effected to it.

Further according to the invention the adhesive is heat sensitive and the activation thereof is caused by heating the sheet in the said selective places.

Still further according to the invention the heating of the adhesive is effected by means of induction heating.

Applicant has found that induction heating provides a very convenient manner for heating the adhesive in a very short period of time over a very small area to a high enough temperature

5

to activate the adhesive.

It will be appreciated that the temperature which is required to activate the adhesive will depend on the particular adhesive employed.

In one form of the invention the sheet may be of a suitable reflective material.

The reflective material may, for example, be that which is prescribed by a particular local traffic authority for motor vehicle registration plates intended to be used in its jurisdiction.

In another form of the invention the sheet may be of a colour which contrasts with that of the plate.

Preferably the plate comprises a pre-painted blank of a suitable material such as thin guage steel or aluminium, for example.

Further according to the invention the method includes the further steps of embossing the characters in the plate; cutting through the sheet material all along the outer peripheries of the embossed characters; removing the cut out material to expose the underlying embossed characters; and activating the rest of the adhesive on the sheet to cause the rest of the sheet to adhere to the plate.

Further according to the invention the subsequent activation of the adhesive is effected by heating it while the plate is held under conditions of reduced pressure.

Applicant has found that such reduced pressure causes the sheet to be "sucked" onto the plate and in this manner any air which may be trapped between the sheet and the plate is removed so that a very secure bond can be effected between the sheet and the plate.

In one form of the invention the subsequent heating operation may be carried out in an evacuatable chamber which is heated by means of a plurality of quartz lamps located in the chamber.

Further according to the invention the embossing of the plate may be effected by means of co-operating die members which include cutting edges adapted to cut through the sheet material during the final stages of the embossing operation.

A method and means for effecting such an embossing operation is, for example, disclosed in South African patent number 81/4417.

Further according to the invention apparatus for carrying out the method according to the invention includes an induction heating element comprising an elongated metal rib arranged in a loop of substantially rectangular configuration, the area enclosed by the loop being of similar shape to, but of slightly smaller dimensions, than that of the plate constituting the final product of the embossing operation.

With this arrangement, when the heating element is located on the plate to be embossed, the rib extends substantially all along the outer peripheral regions of the plate so that it will heat the adhesive on the sheet along a correspondingly located zone.

Preferably the heating element is carried on a shoe of heat insulating material such as asbestos, for example, the shoe being mounted for movement between one position where it engages and traps the plate to be embossed beneath it during the heating operation to a second position where it does not so engage the plate.

The induction heating element may be activated in conventional manner by an induction generator of suitable construction.

Applicant has found a 9 Kilowatt induction generator suitable for this purpose.

Further according to the invention the apparatus for carrying out the method of the invention includes a chamber in which at least one embossed plate may be received; the chamber being adapted to have the pressure inside it reduced and the chamber furthermore including one or more heating elements capable of raising the temperature inside the chamber to a value sufficient to effect the subsequent heating of the adhesive.

Preferably the chamber includes an outlet which is adapted for connection to a vacuum pump or the like by means of which the pressure inside the chamber can be reduced.

Preferably also the chamber includes a pivotally mounted lid which overlies the plate or plates in the chamber, and which houses the heating elements.

Preferably also the heating elements comprise quartz lamps.

Further according to the invention the chamber includes a platform on which the embossed plate

10

or plates can be received; the platform including a plurality of apertures through which air may be sucked when the pressure inside the chamber is reduced; the chamber furthermore including a pad of resiliently flexible material such as rubber of the like intended to overlie at least one embossed plate located on the platform.

With this arrangement, when the pressure in the chamber is reduced, the pad is sucked onto the platform to trap the embossed plate between it and the platform in this manner exerting an even pressure over the entire surface of the sheet, which, together with the heat supplied by the heating elements, causes a very secure bond to be formed between the sheet and the plate.

One embodiment of the invention will now be described by way of example with reference to the enclosed drawings wherein:

Figure 1 is a diagrammatic side elevation of part of the apparatus for effecting the

11

·initial heating operation of the plate;

Figure 2 is a diagrammatic plan view showing part of the apparatus of figure 1 in more detail;

Figure 3 is a diagrammatic perspective view of part of the apparatus for effecting the embossing and subsequent heating of the plate;

Figure 4 is a diagrammatic perspective view showing part of the apparatus of figure 3 in more detail;

Figure 5 is a similar view as figure 4 showing another part of the apparatus of figure 3 in more detail; and

Figure 6 is a diagramatic perspective view of an embossed number plate made according to the invention.

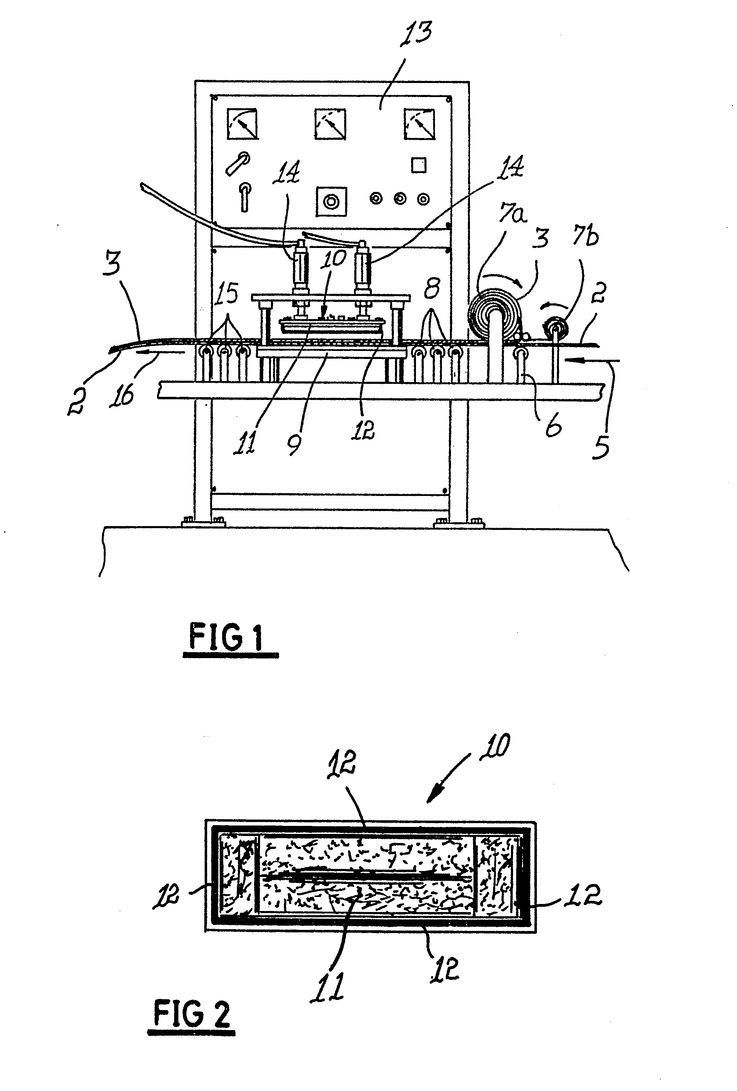

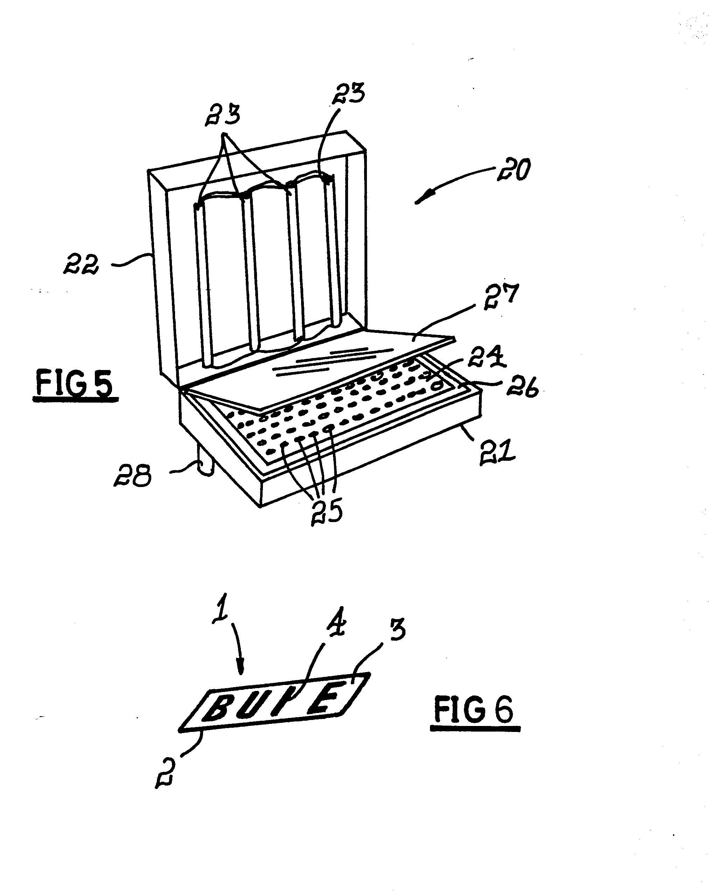

In figure 6 the final product, constituting a motor vehicle registration plate 1 which has been made by the apparatus of figures 1 to 5, is shown. Plate 1 comprises a pre-painted blank plate 2 of which the operative face has a sheet of reflective material 3 adhesively secured to it. As will be described in more detail below, the characters 4 on plate 1 are embossed in such a manner that those parts of sheet 3 overlying characters 4 are cut out and removed to expose the underlying embossed pre-painted blank plate 2 in these areas.

In the apparatus shown in figure 1 the blank plate 2, constituting an elongated strip of pre-painted thin gauge steel, is fed in a continuous line from a supply roll (not shown) in the direction of arrow 5 towards a pair of rupping rollers 6.

A first rotatable spool 7a carries a roll of the reflective material 3 in the form of an elongated strip of which the one face is coated with a temperature sensitive adhesive which is carried by a suitable backing sheet in strip form. Spools 7a and rollers 6 are so located relative to each other and to the rest of the apparatus that in operation plate 2 and sheet 3 are fed in superimposed overlying relationship towards rollers 8 while at the same time the backing strip is removed from sheet 3 and wound onto a spool 7b. The superimposed sheets then pass onto a table 9 of which the operative face is of a suitable heat resistant material. A movable heating shoe 10 which is mounted above table 9 comprises a substantially rectangular member 11 of a suitable heat insulating material such as asbestos or the like. Member 11 carries on its lower face an induction heating element 12, which is connected to the terminals (not shown) of a nine kilowatt induction generator 13. Element 12 comprises a rib of electricity conducting material, such as copper or the like, which is arranged as a loop of substantially rectangular configuration in plan. The area enclosed by the loop is of similar configuration to, but slightly smaller than, the operative face of the embossed plate 1. When shoe 10 is accordingly located on blank plate 2, the two longer parts of the loop defined by rib 12 will be located just inside the outer edge of blank plate 2 while the two shorter parts of the loop will be located just inside the zones along which blank plate 2 will be cut to provide the lengths required for the embossed plates 1.

Shoe 10 is moved by means of hydraulically operated pistons 14 from one position where it engages and traps the superimposed blank plate 2 and sheet 3 beneath it to a second position where it is spaced above them.

In operation, when shoe 10 is made to engage blank plate 2 and its superimposed sheet 3, and element 12 is activated by generator 13, an electric current is induced in blank plate 2 for approximately one second which causes a high temperature to develop in plate 2 and sheet 3 in those areas located immediately below rib 12. As a result of this, the adhesive on sheet 3 is activated and sheet 3 is accordingly, secured to blank plate 2 in these areas.

15

As soon as this heating operation is completed, plate 2 and sheet 3 are moved via rollers 15 in the direction of arrow 16 to the next stage in the manufacturing sequence (not shown) where plate 2 and sheet 3 are cut into the lengths required for the final product and, if required, a peripherally extending ridge is stamped into the material of plate 2.

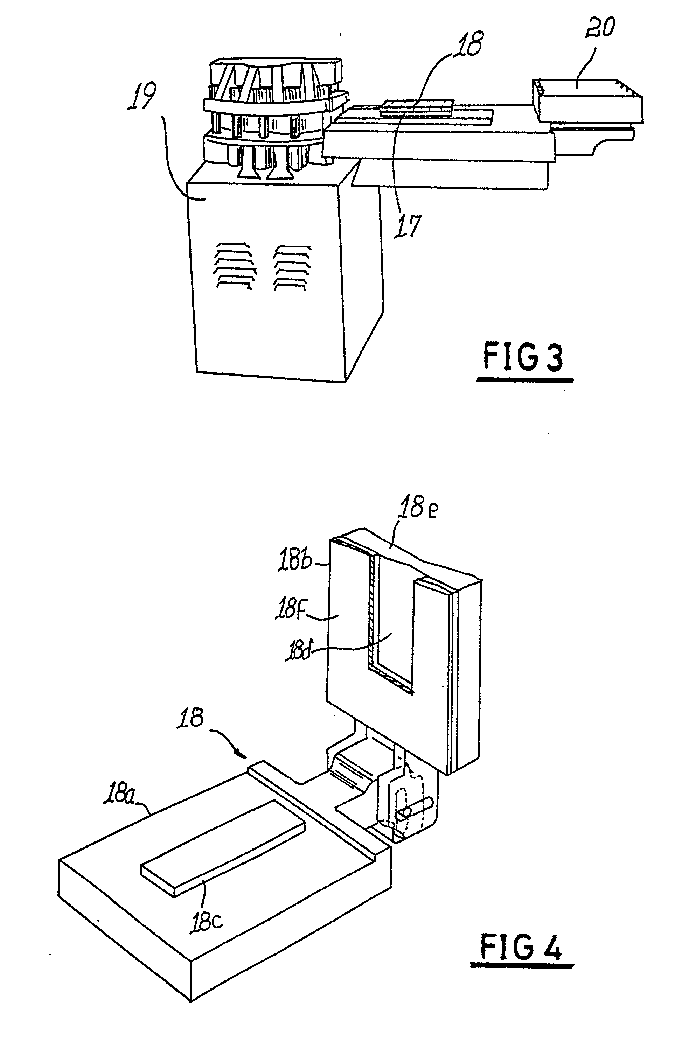

The cut plate 2 and sheet 3 are then passed to the apparatus shown in figure 3 where they are located, together with a plurality of dies 18, on a tray 17. Each of the dies 18 (figure 4) comprises a pair of pivotally connected co-operating die members 18a and 18b between which the blank plate 2 and its sheet 3 can be sandwiched. Member 18a includes a raised formation 18c constituting the punch of the die while member 18b includes a complementary shaped recess 18d constituting the anvil of the die. The side wall of anvil 18d includes a cutting edge 18e adapted to cut through the sheet material 3 all along the outer peripheries of the embossed chamber during the final stage of

16

the embossing operation. The operative face of member 18b includes a pad 18f of resilietly flexible material so that when members 18a and 18b are closed onto each other with a blank plate 3 trapped between them, members 18a and 18b are capable of limited movement towards each other in order to effect the embossing in plate 2.

For the embossing operation tray 17, with a plate 2 and sheet 3 trapped in dies 18 thereon, is passed into a press 19 in which a hydraulically operated piston and cylinder (not shown) cause the co-operating die members 18a and 18b of each die 18 to move towards each other in order to emboss characters 4 into plate 2 and to cut through sheet material 3 in the said manner. After the cut out material 3 has been removed to expose the underlying embossed plate 2, the embossed plate is passed to a heater 20.

As shown in figure 5, heater 20 includes an enclosure 21 which has a lid 22 which is pivotally connected thereto and which is provided on its inside face with four one kilowatt quartz lamps 23.

Enclosure 21 is provided on its inside with a substantially rectangularly shaped platform 24 which is of a suitable heat resistant material and on which two adjacently disposed embossed plates 1 may be located in side-by-side relationship. Platform 24 which is provided over its entire surface with a plurality of small apertures 25, is located in an annular rubber seal 26 which extends along the inner wall of enclosure 21. Enclosure 21 also includes a pad 27 of resiliently flexible rubber which is of such a size that it can overlie two plates 2 while they are located on platform 24. Enclosure 21 is provided with a spigot like outlet 28 which is connectable to a vacuum pump (not shown) by means of which the pressure inside enclosure 21 can be reduced.

In operation the embossed plates 2 are located inside enclosure 21 and suction applied by means of the pump to cause the pressure inside enclosure 21 to fall to a value in the order 50 to 70 kilopascals. As a result of this, pad 27 is sucked onto platform 24 in this way trapping plates 2 firmly between it and platform 24 while at the same time allowing any air located between plate 2 and sheet 3 to escape via apertures 25.

Simultaneously with the application of the aforesaid suction, quarts lamps 23 are switched on for approximately 20 seconds to cause the temperature inside enclosure 21 to increase to approximately 100°C. As a result of this, the rest of the adhesive on sheet 3 is activated and sheet 3 is accordingly securely bonded to plate 2.

The embossed plates 2, which may then be removed from enclosure 21, consitute the completed product 1 shown in figure 6.

It will be appreciated that the invention also includes with its scope a plate such as a number

19

plate or the like, which has been made in accordance with the method and/or apparatus of this invention.

It will be appreciated further that there are many variations in detail possible with a method and apparatus for embossing a number plate or the like according to the invention, and the product of such method and apparatus, without departing from the scope of the appended claims.

20

CLAIMS

1.  A method of embossing characters in a plate, particularly a motor vehicle registration plate, including the steps of locating onto the intended operative face of the plate a sheet of which the intended operative face differs visually from the intended operative face of the plate and of which the other face of the sheet is provided with an activatable adhesive; and activating the adhesive selectivey in places on the sheet other than those where the embossed characters will appear in order to cause the sheet to adhere to the plate in those places only.

2.  The method of claim 1 wherein the said selective places are located in a narrow zone extending along the outer edges of the plate.

3.  The method of claims 1 or 2 wherein the adhesive is heat sensitive and the activation thereof is caused by heating the sheet in the said selective places.

4. The method of claim 3 wherein the activation of the adhesive is effected by means of induction heating.

5. The method of any one of the preceding claims wherein the sheet is of a suitable reflective material.

6. The method of claim 5 wherein the reflective material is that which is prescribed by a particular local traffic authority for motor vehicle registration plates intended to be used in its jurisdiction.

7. The method of any one of claims 1 to 4 wherein the sheet is of a colour which contrasts with that of the plate.

8. The method of any one of the preceding claims wherein the plate comprises a

22

pre-painted blank of a suitable material such as thin guage steel or aluminium, for example.

9. The method of any one of the preceding claims including the further steps of embossing the characters in the plate; cutting through the material of the sheet all along the outer peripheries of the embossed characters; removing the cut out material to expose the underlying embossed characters; and activating the rest of the adhesive on the sheet to cause the rest of the sheet to adhere to the plate.

10. The method of claim 9 wherein the activation of the rest of the adhesive is effected by heating the plate while it is held under conditions of reduced pressure.

11. The method of claim 10 wherein the heating of the plate to activate the rest of the adhesive is carried out in an evacuatable chamber which is heated by means of a plurality of quarts lamps located in the chamber.

12. The method of any one of claims 9 to 11 wherein the embossing of the plate is effected by means of co-operating die members which include cutting edges adapted to cut through the sheet material during the final stages of the embossing operation.

13. The method of claim 12 wherein the embossing operation is effected in the manner disclosed in South African patent number 81/4417.

14. Apparatus for carrying out the method of any one of the preceding claims including an induction heating element for effecting the activation of the adhesive in the said places, the element comprising an elongated metal rib arranged in a loop of substantially rectangular configuration, the area enclosed by the loop being of similar shape to, but of slightly smaller

24

dimensions than, that of the plate constituting the final product of the embossing operation.

15. The apparatus of claim 14 wherein the heating element is carried on a shoe of suitable heat insulating material; the shoe being mounted for movement between one position where it engages and traps the plate to be embossed beneath it during the heating operation to a second position where it does not so engage the plate.

16. The apparatus of claim 15 wherein the heating element is activated in conventional manner by an induction generator of suitable capacity.

17. The apparatus of any one of claims 14 to 16 for carrying out the method of any one of claims 9 to 13 including a chamber in which at least one embossed plate may be received; the chamber being adapted to have

25

the pressure inside it reduced and the chamber furthermore including one or more heating elements capable of raising the temperature inside the chamber to a value sufficient to effect the subsequent heating of the adhesive.

18. The apparatus of claim 17 wherein the chamber includes an outlet which is adapted for connection to a vacuum pump or the like by means of which the pressure inside the chamber can be reduced.

19. The apparatus of any one of claims 17 or 18 wherein the chamber includes a pivotally mounted lid which overlies the plate or plates in the chamber, and which houses the heating elements.

20. The apparatus of any one of claims 17 to 19 wherein the heating elements comprise quartz lamps.

21. The apparatus of any one of claims 17 to 20 wherein the chamber includes a platform on which the embossed plate or plates can be received; the platform including a plurality of apertures through which air may be sucked when the pressure inside the chamber is reduced; the chamber furthermore including a pad of resiliently flexible material such as rubber or the like intended to overlie at least one embossed plate located on the platform.

FIG 1

FIG 2

0105643

**FIG 3**

**FIG 4**

FIG 5

FIG 6

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-1 458 551  (TIFLEX S.A.) * Column 2, paragraph 5 * | 1,3,5, 7,8,12 | G 09 F   7/16 |
| | --- | | |
| A | FR-E-  93 249  (G. LEVY) * Whole document * | 1,8,9, 12 | |
| | --- | | |
| A | GB-A-1 438 947  (LETRASET INTERNATIONAL LTD.) * Page 1, lines 57-67 * | 1,9,12 | |
| | --- | | |
| A | AU-A-  44 083  (PLASTISIGNS OF AUSTRALIA PTY. LTD.) | 17,18 | |
| | ----- | | |

| TECHNICAL FIELDS SEARCHED (Int. Cl. ³) |
|---|
| B 60 R   13/10 |
| G 09 F    3/00 |
| G 09 F    7/00 |

The present search report has been drawn up for all claims

| Place of search BERLIN | Date of completion of the search 24-11-1983 | Examiner BOTTERILL K.J. |
|---|---|---|